# EUROPÄISCHE PATENTANMELDUNG

(11) **EP 0 613 933 A2**
(43) Veröffentlichungstag der Anmeldung: **07.09.1994**
(21) Anmeldenummer: 94103193.2
(22) Anmeldetag: 03.03.1994
(51) Int. Cl.: C09J 5/02, C09K 3/14

(54) **Verfahren zur Präparation von Substratoberflächen für Verklebungen und dafür geeigneter Schleifkörper**

(30) Priorität: 03.03.1993 DE 4306642
(71) Anmelder: THERA Patent GmbH & Co. KG Gesellschaft für industrielle Schutzrechte, D-82229 Seefeld (DE)
(72) Erfinder: Eckhardt, Gunther, Dr., D-82211 Frieding/Post Herrsching (DE); Guggenberger, Rainer, Dr., D-82211 Herrsching (DE); Koran, Peter, Dr., D-82362 Weilheim (DE); Nowak, Reinhold, Dr., D-82276 Adelshofen (DE); Burger, Bernd, D-82239 Alling (DE)
(74) Vertreter: Abitz, Walter, Dr.-Ing.

(57) **Zusammenfassung**

Die Erfindung betrifft ein Verfahren zur Präparation von Substratoberflächen für das Verkleben oder Beschichten mit flüssig auftragbaren organischen Klebstoffen, bei dem man eine Zusammensetzung aus
(A) 0,01 bis 90 Gew.-% gegebenenfalls silanisiertem Material mit einer Korngröße < 5 µm und einer größeren Härte als die der Substratoberfläche und/oder
   (B) 20 bis 100 Gew.-% silanisiertem, siliciumhaltigem Material mit einer mittleren Korngröße von 2 bis 200 µm und
   (C) zum Rest einem Abrasionsmittel mit einer Korngröße > 5 µm,
   wobei sich die Mengeangaben auf das Gesamtgewicht aus (A), (B) und (C) beziehen, und wobei die Zusammensetzung zusätzlich
   (D) gegebenenfalls ein Bindemittel, das geeignet ist, aus den vorgenannten Bestandteilen einen Festkörper zu bilden und
   (E) gegebenenfalls ein Verdünnungsmittel und/oder Dispergiermittel oder einem Gemisch dieser Hilfsstoffe zur Erzielung einer geeigneten Verarbeitungskonsistenz enthält,
   auf die zu verklebende oder zu beschichtende Oberfläche aufbringt und mittels horizontal oder überwiegend horizontal einwirkenden Reibungskräften die Komponenten (A) und/oder (B) auf dem Substrat fixiert.

Die Erfindung betrifft auch einen zur Durchführung dieses Verfahrens geeigneten Schleifkörper.

## Beschreibung

Die Erfindung betrifft ein Verfahren zur Präparation von Substratoberflächen für das Verkleben, das Vergießen und das Beschichten sowie einen dafür geeigneten Schleifkörper.

Das Verfahren bezieht sich insbesondere auf die Verbesserung der Festigkeit von Verbunden aus Metall- und/oder Kunststoffoberflächen mit einem flüssig aufgetragenen organischen Klebstoff, der zu einem Kunststoff aushärtet.

Die Oberflächenpräparation zu verklebender Substrate erfolgt entsprechend dem Stand der Technik auf sehr unterschiedliche Weise. So ist es bekannt, die zu verklebenden Oberflächen in geeignet zusammengesetzten Beizbädern vorzubehandeln. Die Coronavorbehandlung von Kunststoffoberflächen sowie die Niederdruckplasmabehandlung stellen sehr wirkungsvolle Vorbehandlungsmethoden dar.

Mit den beschriebenen Methoden lassen sich deutliche Verbesserungen der Verbundfestigkeit erzielen, doch ist ihre Anwendung mit einem hohen Aufwand verbunden.

Weiterhin ist es bekannt, die zu verklebenden Substrate mit Lösungsmitteln oder auch mechanisch zu behandeln, wobei das Schmirgeln bzw. das Sandstrahlen bevorzugte Ausführungsformen darstellen. Eine verbesserte Klimabeständigkeit der Verklebung ist hiermit jedoch nicht erreichbar.

Aus der EP-A-0 326 097 ist ein Verfahren zur Vorbereitung einer Substratoberfläche für die Verbindung mit Kunststoff bekannt, bei welchem man auf die Substratoberfläche eine Schicht durch Sandstrahlen mit einem Mittel aufbringt, welches, bezogen auf das Gewicht des gesamten Sandstrahlmittels aus
(A) 0,01 bis 90 Gew.-% gegebenenfalls silanisiertem Material mit einer Korngröße < 5 µm und einer größeren Härte als die der Substratoberfläche und bzw. oder
(B) 20 bis 100 Gew.-% silanisiertem, siliciumhaltigem Material mit einer Korngröße von 2 bis 200 µm und
(C) zum Rest aus einem Sandstrahlmittel mit einer mittleren Korngröße > 5 µm
besteht und gegebenenfalls die so erhaltene Haftvermittlerschicht anschließend silanisiert.

Ein ähnliches Verfahren wird auch in der EP-A-0 444 701 beschrieben. Um bei diesem Verfahren einen guten Auftrag der gewünschten Schicht zu erreichen, ist es notwendig, das Sandstrahlmittel unter einem Winkel von 90° ± 10° aufzustrahlen. Bei abnehmendem Strahlwinkel nimmt der Auftrag rapide ab.

Nachteilig bei diesen Verfahren ist der hohe apparative Aufwand sowie das Auftreten von Staub, zu dessen Beseitigung aufwendige Maßnahmen notwendig sind.

Aufgabe der Erfindung ist es, ein Oberfläcbenpräparationsverfahren zur Erhöhung von Verbundfestigkeit und Klimabeständigkeit zur Verfügung zu stellen, das die genannten Nachteile vermeidet und insbesondere eine staubfreie und einfache Applikation eines Vorbehandlungsmittels gewährleistet.

Die Aufgabe wird gelöst durch ein Verfahren zur Präparation von Substratoberflächen für das Verkleben oder Beschichten mit flüssig auftragbaren organischen Klebstoffen, welches dadurch gekennzeichnet ist, daß man eine Zusammensetzung aus
(A) 0,01 bis 90 Gew.-% gegebenenfalls silanisiertem Material mit einer Korngröße < 5 µm und einer größeren Härte als die der Substratoberflächen und/oder
(B) 20 bis 100 Gew.-% silanisiertem, siliciumhaltigem Material mit einer mittleren Korngröße von 2 bis 200 µm und
(C) zum Rest aus einem Abrasionsmittel mit einer Korngröße > 5 µm,
wobei sich die Mengenangaben auf das Gesamtgewicht aus (A), (B) und (C) beziehen, und wobei die Zusammensetzung zusätzlich gegebenenfalls
(D) ein Bindemittel, das geeignet ist, aus den vorgenannten Bestandteilen einen Festkörper zu bilden, und
(E) gegebenenfalls ein Verdünnungsmittel und/oder Dispergiermittel oder ein Gemisch dieser Hilfsstoffe zur Erzielung einer geeigneten Verarbeitungskonsistenz enthält,
auf die zu verklebende oder zu beschichtende Oberfläche aufbringt und mittels horizontal oder überwiegend horizontal einwirkenden Reibungskräften die Komponente (A) und/oder (B) auf dem Substrat fixiert.

Überraschenderweise lassen sich mit diesem Verfahren erhebliche Verbesserungen in der Verbundfestigkeit mit den zu verklebenden Gegenständen erreichen. Wie schon oben erwähnt, ist es bei dem Verfahren gemäß EP-A-0 326 097 erforderlich, daß das Sandstrahlmittel unter einem Winkel von 90° ± 10° aufgestrahlt wird. Andernfalls ist kein zufriedenstellender Auftrag und damit auch keine zufriedenstellende Verbesserung in der Verbundfestigkeit zu erreichen. Es war daher zu erwarten, daß bei Einwirkung von horizontal oder überwiegend horizontal einwirkenden Reibungskräften praktisch keine Verbesserung bei der Verbundfestigkeit erzielt werden kann. Es mußte vielmehr erwartet werden, daß bei horizontal oder überwiegend horizontal einwirkenden Reibungskräften, wie z.B. bei einfachem mechanischem Schleifen, keine ausreichende Verbindung zwischen der Substratoberfläche und der Komponenten (A) und/oder (B) erreicht werden kann, ja es mußte sogar erwartet werden, daß diese Komponenten mit nur mäßiger Kraft in die aufgerauhte Oberfläche eingebracht werden und keine feste Verbindung mit der Substratoberfläche eingehen, wie dies bei dem praktisch senkrechten Aufprallen der Teilchen beim Sandstrahlen der Fall ist. Überraschenderweise lassen sich nach dem erfindungsgemäßen Verfahren jedoch Verbundfestigkeitsverbesserungen erzielen, die mit den in der EP-A-0 326 097 mittels Sandstrahlen erreichten Verbundfestigkeitsverbesserungen vergleichbar sind. Gleichzeitig wird der Vorteil erzielt, daß nur ein geringer apparativer Aufwand erforderlich ist und keine Staubprobleme auftreten.

Die erfindungsgemäß einzusetzende Zusammensetzung kann als Festkörper, als Pulver oder als pastenförmige bis flüssige Zubereitung sowie als eine Kombination der vorgenannten Ausführungsformen angewendet werden.

Die Anwendung der Zusammensetzung im flüssigen oder pastenförmigen Zustand erfordert den Einsatz von Lösungs- oder Dispergiermitteln, wobei der Einsatz leichtflüchtiger Substanden bevorzugt ist.

In einer bevorzugten Ausführungsform des erfindungsgemäßen Verfahrens wird die Zusammensetzung in flüssiger oder pastöser Form auf die zu verklebende Substratoberfläche aufgebracht und die Lösungs- bzw. Dispergiermittel abgedampft.

Nach einer besonders bevorzugten Ausführungsform des erfindungsgemäßen Verfahrens wird aus den Bestandteilen (A) bis (C) unter Verwendung eines Bindemittels ein Festkörper hergestellt. Dieser Festkörper kann als flächiges, gegebenenfalls flexibles Gebilde oder als massiver Festkörper gegebenenfalls in Form eines Schleifkörpers gestaltet sein. Als Bindemittel eignen sich bevorzugt anorganische Bindemittel wie beispielsweise silikatische oder keramische Bindemittel sowie auch organische Bindemittel wie beispielsweise Reaktivharze bzw. Klebstoffe im weiteren Sinne.

Die Einleitung der Reibungskräfte in die Grenzschicht zwischen der Zubereitung und der Oberfläche des zu verklebenden Substrates kann in vielfältiger Weise erfolgen. Die Reibungskräfte wirken dabei in horizontaler oder nahezu bzw. überwiegend horizontaler Richtung in Bezug auf die Substratoberfläche ein.

Eine einfache Methode ist das manuelle Reiben der Zusammensetzung auf der Oberfläche des Substrates, gegebenenfalls unter Vermittlung einer entsprechenden Aufnahme für den Reibekörper, oder unter Verwendung eines flexiblen flächenförmigen Hilfsmittels, beispielsweise bei einer pulverförmigen Zusammensetzung.

Reibende Relativbewegungen zwischen der Zusammensetzung und der Substratoberfläche können auch durch andere bekannte Methoden erreicht werden. Solche Methoden sind das Schleifen mit geeigneten Formkörpern, beispielsweise mit rotierenden oder schwingenden Formkörpern, oder dergleichen. Möglich ist auch, das Substrat und/oder den Schleifkörper mittels Ultraschall in Bewegung zu setzen.

Die Komponenten (A), (B) und (C) der Zusammensetzung sowie ihre bevorzugten Ausführungsformen sind aus der EP-A-0 326 097 bekannt. Der Inhalt und die gesamte Offenbarung der Druckschrift soll hier ausdrücklich mitumfaßt sein.

Als Komponente (A) werden eingesetzt 0,01 bis 90 Gew.-%, bezogen auf das Gewicht der Komponenten (A) bis (C), gegebenenfalls silanisiertes Material mit einer Korngröße < 5 µm und einer größeren Härte als die der Substratoberfläche, bevorzugt 0,1 bis 30 Gew.-%, insbesondere eines Materials mit einer Korngröße < 1 µm. Besonders bevorzugt ist Material (A) mit einer Korngröße < 0,1 µm, wobei hier wie im folgenden unter "Korngröße" die Primärpartikelgröße gemeint ist.

Die Härte des Substrats und der Komponente (A) kann nach den Methoden von Mohs, Brinell, Knoop oder Vickers bestimmt werden, wobei für die Härteprüfung von Substrat und (A) jeweils die gleiche Methode verwendet werden soll. Bei der Härteprüfung von sehr feinem Material (< 1 µm) verwendet man das gleiche Material in gröberer Form.

In einer bevorzugten Ausführungsform ist das als Komponente (A) verwendete Material silanisiert. Vorzugsweise setzt man als Komponente (A) siliciumhaltiges Material ein, ganz besonders 0,01 bis 50 Gew.-% gegebenenfalls silanisiertes, siliciumhaltiges Material.

Besonders bevorzugt als Komponente (A) sind: Quarz, Quarzglas, Silikatglas mit mindestens 10 Gew.-% Silicium, Siliciumcarbid, Siliciumnitrid und/oder microfeine Kieselsäure; Aluminiumoxid, Titandioxid und/oder Zirkondioxid sowie die sonstigen Oxide, Nitride und/oder Carbide von Elementen der dritten und vierten Hauptgruppe sowie der Nebengruppe 4b. Dieses Material kann beispielsweise eine mittlere Korngröße von 10 µm besitzen, es muß jedoch noch mindestens 0,01 Gew.-% Anteil an gegebenenfalls silanisiertem Material < 5 µm enthalten. Ganz besonders bevorzugt ist microfeine Kieselsäure mit einer mittleren Korngröße von 0,001 bis 0,05 µm, wie z.B. pyrogene Kieselsäure oder Fällungskieselsäuren. Die Komponente (A) muß unter den Reaktionsbedingungen inert sein. Bevorzugte Komponenten (A) sind auch bei Temperaturen > 1000°C inert.

Als Komponente (B) finden Verwendung 20 bis 100 Gew.-%, bezogen auf das Gewicht der Komponenten (A) bis (C), silanisiertes, siliciumhaltiges Material mit einer mittleren Korngröße von 2 bis 200 µm; bevorzugt verwendet werden können 50 bis 100 Gew.-% mit einer bevorzugten mittleren Korngröße von 5 bis 100 µm. Als silanisiertes siliciumhaltiges Material verwendet werden können beispielsweise Quarz, Quarzglas, Silikatglas mit mindestens 10 Gew.-% Silicium, Siliciumnitrid, Siliciumcarbid oder keramisches Material mit mindestens 10 Gew.-% Silicium. Besonders bevorzugt werden Quarzglas, Silikatglas sowie amorphes Siliciumnitrid. Bei der Verwendung von Silikatgläsern und siliciumhaltigem keramischem Material werden Materialien mit einem Siliciumgehalt > 30 Gew.-% bevorzugt.

Das erfindungsgemäß als (C) zu verwendende Abrasionsmittel mit einer mittleren Korngröße > 5 µm ist ein übliches Abrasionsmittel, d.h. ein Material hoher Härte, wie beispielsweise Aluminiumoxid (Korund). Die mittlere Korngröße beträgt > 5 µm bis 500 µm, insbesondere 20 bis 250 µm. Vorteilhaft können aber auch Quarz, Quarzglas, Silikate, Silikatgläser, Siliciumnitrid, Siliciumcarbid oder keramische Materialien verwendet werden. Man kann als Komponenten (A) und/oder (B) und (C) ein Material gleicher Zusammensetzung, aber unterschiedlicher Korngröße verwenden.

Wenn Bestandteile der Zusammensetzung silanisiert sind, so enthalten sie vorzugsweise 0,1 bis 20 Gew.-% Silan, besoners bevorzugt 1 bis 5 Gew.-%, bezogen auf das Gewicht des Bestandteils der Zusammensetzung. Die Silanisierung erfolgt in an sich bekannter Weise, wie sie z.B. in der Füllstofftechnologie verwendet wird. Alle üblicherweise eingesetzten Silane eignen sich zum Herstellen der erfindungsgemäß verwendeten Bestandteile der Zusammensetzung; besonders geeignet sind Vinyltrimethoxysilan, 3-Glycidoxypropyltrimethoxysilan, 3-Methacryloxypropyltrimethoxysilan und Tetramethyldivinylsilazan. Die Verbindungen werden vorzugsweise in Form alkoholischer und/oder wässrigsaurer- z.B. essigsaurer - Lösung verwendet.

Es hat sich als besonders vorteilhaft erwiesen, sowohl bei der Silanisierung von Bestandteilen der Zubereitung als auch bei der Silanisierung der erfindungsgemäß behandelten Oberfläche jeweils Silane mit den gleichen funktionellen Gruppen einzusetzen, wie sie auch im Monomeren des Kunststoffs, z.B. des Klebers, vorhanden sind. So setzt man zum Verkleben von Metallen mit Epoxidharzen beispielsweise vorteilhaft Silane mit Epoxyendgruppen ein.

Falls für die Verklebungen aktivierbare, insbesondere anaerobe Klebstoffe zum Einsatz kommen sollen, und handelt es sich bei den Substratoberflächen um Nichtmetalloberflächen, kann den Komponenten (A) bis (C) noch ein Aktivator gemäß der Lehre der EP-A-0 444 701 zugesetzt werden, der die Erhärtung eines aktivierbaren Klebstoffes katalysiert und/oder beschleunigt. Der Inhalt und die gesamte Offenbarung der genannten Druckschrift soll hier ausdrücklich mitumfaßt sein. Als Aktivatoren kommen Metallpulver, Metallsalzpulver, Amine, Ammoniumverbindungen und/oder andere basische Verbindungen in Mengen von 0,001 bis 25, vorzugsweise 0,1 bis 10 und insbesondere 1 bis 10 Gew.-%, bezogen auf das Gesamtgewicht der Komponenten (A) bis (C) in Betracht.

Das erfindungsgemäße Verfahren eignet sich für die Präparation von Substratoberflächen, die anschließend mit anderen Gegenständen verklebt, oder die beschichtet werden sollen. Es eignet sich auch für Anwendungszwecke, bei denen über einer Substratoberfläche Ausgießungen vorgenommen werden.

### Beispiel 1

Eine Zusammensetzung, bestehend aus 95 Masseteilen des Abrasionsmittels Korund mit einer mittleren Korngröße von 240 µm und 7 Masseteilen pyrogener Kieselsäure mit einer mittleren Korngröße von 48 nm, wurde im pulverförmigen Zustand für die Präparation von Substratoberflächen verwendet. Es wurden Proben aus Polypropylen mit den Abmessungen 5 x 30 x 120 mm verwendet, die mittels eines mit Isopropanol befeuchteten Zellstofftuches entfettet worden waren.

Die Zusammensetzung wurde in einer etwa 1 mm starken Schicht auf das Polypropylen aufgetragen und manuell mit Hilfe eines Leinengewebes 30 Sekunden lang gegen die Substratoberfläche gerieben.

Nach Entfernen der Zubereitung durch Abklopfen und Abblasen erfolgte die Verklebung mit einem 2-Komponenten-Epoxidharz (Duopox E32 der Firma DELO Industrieklebstoffe, München-Gräfelfing).

Es wurde eine überlappende Verklebung ausgeführt und nach 72 Stunden Lagerzeit die Zugscherfestigkeit der Verklebung gemäß DIN 53 283 bestimmt.

Die Zugscherfestigkeitswerte der erfindungsgemäß vorbehandelten Proben lagen bei 2,8 N/mm². Dagegen wurde mit Proben, die nur mit Isopropanol entfettet worden waren, Zugscherfestigkeitswerte von nur 1,8 N/mm² erreicht.

### Beispiel 2

Es wurden eine Zusammensetzung und entfettete Probekörper gemäß Beispiel 1 verwendet.

10 Probekörper wurden nebeneinander fest eingespannt, mit der Zubereitung gemäß Beispiel 1 in einer Stärke von 1 mm bestreut und 12 Sekunden lang mit einer handelsüblichen Schwingschleifeinrichtung behandelt.

Die Verklebung und Festigkeitsmessung erfolgte analog Beispiel 1.

Bei den erfindungsgemäß vorbehandelten Prüfkörpern wurde eine Zugscherfestigkeit der Verklebung von 4,6 N/mm² erreicht.

### Beispiel 3

Eine Zusammensetzung, bestehend aus 85 Masseteilen des Abrasionsmittels Korund mit einer mittleren Korngröße von 110 µm sowie 15 Masseteilen pyrogener Kieselsäure mit einer mittleren Korngröße von 48 nm, die mit 3 % 3-Methacryloxypropyltrimethoxysilan silanisiert worden waren, wurde zur Verbesserung der Klebfestigkeit von hochgoldhaltigen Legierungen eingesetzt.

Probeplättchen aus Degulor M (Fa. Degussa) mit den Abmessungen 2 x 10 x 50 mm wurden 30 Sekunden lang mit der pulverförmigen Zusammensetzung in der in Beispiel 1 beschriebenen Weise vorbehandelt.

Die Verklebung der vorbehandelten Plättchen (10 mm Überlappung) mit einem radikalisch polymerisierendem Flüssigkunststoff der Firma ESPE ergab Zugscherfestigkeitswerte von 2,9 N/mm². Ohne Vorbehandlung wurden Zugscherfestigkeiten von lediglich 0,8 N/mm² erzielt.

Bei Anwendung eines Schwingschleifers gemäß Beispiel 2 unter Verwendung der Zusammensetzung nach diesem Beispiel und von Degulor M-Plättchen konnten unter vergleichbaren Bedingungen Zugscherfestigkeiten von 6,7 N/mm² erreicht werden.

### Beispiel 4

Aus einer Zusammensetzung, bestehend aus 28,2 Masseteilen des Abrasionsmittels Korund mit einer mittleren Korngröße von 250 µm, 25 Masseteilen Korund mit einer mittleren Teilchengröße von 110 µm, 20,5 Masseteilen einer pyrogenen Kieselsäure mit einer mittleren Teilchengröße von 45 nm, 8,2 Masseteilen des 3-Glycidoxypropyltrimethoxysilans und 18,1 Masseteilen Wasser wurden nach einem intensiven Mischvorgang auf einem Planetenrührwerk runde Platten mit einem Durchmesser von 36 mm und einer Stärke von 10 mm geformt.

Die Formlinge wurden der folgenden Temperaturbehandlung unterworfen:
4 Stunden bei 80°C, 6 Stunden bei 135°C, 2 Stunden bei 650°C und 2 Stunden bei 950°C.

Die scheibenförmigen Körper wurden auf tellerförmige Stahlaufnahmen mit einem schnellhärtenden 2K-Epoxidharzklebstoff der Firma DELO-Industrieklebstoffe aufgeklebt und die so erhaltenen Schleifkörper zur Vorbehandlung von Degulor M-Plättchen verwendet.

Durch diese Vorbehandlung konnten Zugscherfestigkeitswerte von 4,9 N/mm² erreicht werden, wobei die Zugscherfestigkeit von Verklebungen mit nicht vorbehandelten Degulor M-Plättchen unter gleichen Verkleb- und Prüfbedingungen bei 0,8 N/mm² lag.

## Patentansprüche

1. Verfahren zur Präparation von Substratoberflächen für das Verkleben oder Beschichten mit flüssig auftragbaren organischen Klebstoffen, dadurch gekennzeichnet, daß man eine Zusammensetzung aus
(A) 0,01 bis 90 Gew.-% gegebenenfalls silanisiertem Material mit einer Korngröße < 5 µm und einer größeren Härte als die der Substratoberfläche und/oder
(B) 20 bis 100 Gew.-% silanisiertem, siliciumhaltigem Material mit einer mittleren Korngröße von 2 bis 200 µm und
(C) zum Rest einem Abrasionsmittel mit einer Korngröße > 5 µm,
wobei sich die Mengeangaben auf das Gesamtgewicht aus (A), (B) und (C) beziehen, und wobei die Zusammensetzung zusätzlich
(D) gegebenenfalls ein Bindemittel, das geeignet ist, aus den vorgenannten Bestandteilen einen Festkörper zu bilden und
(E) gegebenenfalls ein Verdünnungsmittel und/oder Dispergiermittel oder einem Gemisch dieser Hilfsstoffe zur Erzielung einer geeigneten Verarbeitungskonsistenz enthält,
auf die zu verklebende oder zu beschichtende Oberfläche aufbringt und mittels horizontal oder überwiegend horizontal einwirkenden Reibungskräften die Komponenten (A) und/oder (B) auf dem Substrat fixiert.

2. Verfahren nach Anspruch 1, dadurch gekennzeichnet, daß die Zusammensetzung flüssig oder pastenförmig ist und zur Erzielung einer brauchbaren Verarbeitungskonsistenz Lösungsmittel und/oder Dispergiermittel enthält.

3. Verfahren nach den Ansprüchen 1 oder 2, dadurch gekennzeichnet, daß die Zusammensetzung leichtflüchtige Lösungsmittel und/oder Dispergiermittel und gegebenenfalls weitere Hilfsmittel enthält.

4. Verfahren nach Anspruch 1, dadurch gekennzeichnet, daß die Zusammensetzung organische und/oder anorganische Bindemittel in einem Anteil von 0,5 bis 10 Gew.-% der Gesamtmasse der Zusammensetzung enthält.

5. Verfahren nach den Ansprüchen 1 oder 4, dadurch gekennzeichnet, daß die Zusammensetzung als Bindemittel Hochpolymere enthält, die in Wasser löslich sind oder in Wasser dispergiert werden können.

6. Verfahren nach den Ansprüchen 1 oder 4, dadurch gekennzeichnet, daß die Zusammensetzung organische Hochpolymere und/oder organische polymerbildende Substanzen als Bindemittel enthält, die in leichtflüchtigen organischen Lösungsmitteln gelöst und/oder dispergiert werden können.

7. Verfahren nach den Ansprüchen 1 oder 4, dadurch gekennzeichnet, daß die Zusammensetzung als Bindemittel anorganische, wasserverdünnbare Polymere oder polymerbildende Verbindungen enthält.

8. Verfahren nach Anspruch 1, dadurch gekennzeichnet, daß die Zusammensetzung in Form eines Schleifkörpers ausgebildet ist, wobei der Schleifkörper durch Art und Konzentration des Bindemittels so eingestellt ist, daß seine Oberfläche durch Abtrag ständig erneuert wird.

9. Verfahren nach Anspruch 8, dadurch gekennzeichnet, daß der Schleifkörper hergestellt wird durch Vermischen von 1 bis 90 Masseteilen der Komponenten (A) bis (C) mit 0,5 bis 50 Masseteilen eines Silans, intensives Mischen der Komponenten, Formen von Rohlingen aus dem pastösen Gemisch und stufenweise thermische Behandlung dieser Rohlinge bei Temperaturen im Bereich von 20 bis 1000°C.

10. Verfahren gemäß Anspruch 8, dadurch gekennzeichnet, daß der Schleifkörper hergestellt wird durch Vermischen von 50 bis 100 Masseteilen der Komponenten (A) bis (C), 0,5 bis 50 Masseteilen mindestens eines Silans entsprechend Komponente (D), 0,5 bis 50 Masseteilen Wasser mit einem pH-Wert im Bereich von 2,5 bis 5 entsprechend Komponente (E), intensives Mischen der Komponenten bei Temperaturen von 10°C bis 80°C, Entfernung der flüchtigen Bestandteile durch Vakuumbehandlung, Verpressen des Gemisches zu Rohlingen und thermische Behandlung dieser Rohlinge bei Temperaturen im Bereich von 20 bis 1000°C.

11. Verfahren nach den Ansprüchen 8 bis 10, dadurch gekennzeichnet, daß die Schleifkörper flächige Gebilde darstellen, die auf entsprechend flächige oder rotationssymmetrische Aufnahmen aufgeklebt werden.

12. Verfahren nach Anspruch 1, dadurch gekennzeichnet, daß die Zusammensetzung in pulverförmigen Zustand zwischen die Substratoberfläche und ein flächenförmiges Kraftübertragungsmittel gebracht und das Kraftübertragungsmittel in eine reibende Relativbewegung zur Substratoberfläche versetzt wird.

13. Verfahren nach den Ansprüchen 1 oder 12, dadurch gekennzeichnet, daß die pulverförmige Zusammensetzung zwischen die Substratoberfläche und eine Schleifeinrichtung gebracht wird.

14. Verfahren nach den Ansprüchen 1 oder 6, dadurch gekennzeichnet, daß eine Schicht der pastenförmigen Zusammensetzung auf die Substratoberfläche aufgetragen, das Lösungsmittel und/oder das Dispergiermittel verdampft und die so vorbereitete Substratoberfläche mit einer Schleifeinrichtung bearbeitet werden.

15. Verfahren nach Anspruch 1, dadurch gekennzeichnet, daß die Komponente (A) eine mittlere Korngrößer kleiner 1 µm aufweist.

16. Verfahren nach Anspruch 1, dadurch gekennzeichnet, daß die Komponente (A) microfeine Kieselsäure mit einer mittleren Korngröße von 0,001 bis 0,05 µm darstellt.

17. Verfahren nach Anspruch 1, dadurch gekennzeichnet, daß die Zusammensetzung neben den Komponenten (A) bis (C) zusätzlich einen Aktivator für aktivierbare, insbesondere anaerobe Klebstoffe enthält.

18. Verfahren nach Anspruch 17, dadurch gekennzeichnet, daß die Zusammensetzung als Aktivator Metallpulver, Metallsalzpulver, Amine, Ammoniumverbindungen und/oder andere basische Verbindungen in Mengen von 0,001 bis 25, vorzugsweise 0,1 bis 10, insbesondere 1 bis 10 Gew.-%, bezogen auf das Gesamtgewicht der Komponenten (A) bis (C) enthält.

19. Schleifkörper zur Präparation von Substratoberflächen für das Verkleben oder Beschichten mit flüssig auftragbaren organischen Klebstoffen, dadurch gekennzeichnet, daß der Schleifkörper besteht aus
(A) 0,01 bis 90 Gew.-% gegebenenfalls silanisiertem Mate rial mit einer Korngröße < 5 µm und einer größeren Härte als die der Substratoberfläche und/oder
(B) 20 bis 100 Gew.-% silanisiertem, siliciumhaltigem Material mit einer mittleren Korngröße von 2 bis 200 µm und
(C) zum Rest einem Abrasionsmittel mit einer Korngröße > 5 µm,
wobei sich die Mengenangaben auf das Gesamtgewicht aus (A), (B) und (C) beziehen, und zusätzlich
(D) einem Bindemittel, das geeignet ist, aus den vorgenannten Bestandteilen einen Festkörper zu bilden,
wobei die Ausgangszusammensetzung zur Herstellung des Schleifkörpers
(E) gegebenenfalls ein Verdünnungsmittel und/oder Disper giermittel oder ein Gemisch dieser Hilfsstoffe zur Erzielung einer geeigneten Verarbeitungskonsistenz enthält.
